(19) Europäisches Patentamt / European Patent Office / Office européen des brevets

(11) EP 4 779 348 A1

(12) EUROPEAN PATENT APPLICATION
published in accordance with Art. 153(4) EPC

(43) Date of publication:
22.07.2026 Bulletin 2026/30

(51) International Patent Classification (IPC):
$G01S\ 5/16$ (2006.01)  $G01S\ 17/06$ (2006.01)
$G01S\ 7/481$ (2006.01)  $G01S\ 7/4915$ (2020.01)
$G01S\ 7/4913$ (2020.01)  $G01S\ 5/00$ (2006.01)
$G02B\ 5/136$ (2006.01)

(21) Application number: 24732379.3

(22) Date of filing: 08.04.2024

(52) Cooperative Patent Classification (CPC):
G01S 17/46; G01S 5/00; G01S 5/16; G01S 7/481;
G01S 7/4913; G01S 7/4915; G01S 17/06;
G01S 17/66; G01S 17/894; G01S 19/485;
G02B 5/136

(86) International application number:
PCT/KR2024/004629

(87) International publication number:
WO 2025/058156 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.09.2023 KR 20230122921

(71) Applicant: Seoul National University R&DB
Foundation
Seoul 08826 (KR)

(72) Inventors:
• LEE, Ji Kang
Seoul 08826 (KR)
• KIM, O Jong
Seoul 05006 (KR)
• KANG, Min Seok
Seoul 08826 (KR)
• KEE, Chang Don
Seoul 08826 (KR)

(74) Representative: EP&C
P.O. Box 3241
2280 GE Rijswijk (NL)

(54) INDOOR POSITIONING SYSTEM AND METHOD USING REFLECTED LIGHT

(57) An indoor positioning system and a method thereof using reflected light is proposed. The system and the method are configured to use an optical signal transmitter and receiver and a reflector array composed of retroreflectors whose angle of incidence of each optical signal is equal to an angle of reflection thereof to calculate a distance to the reflector array on the basis of reception information of each optical signal and calculate an absolute location of the user on the basis of the distance information and absolute location information of each reflective surface of the reflector array, so as to solve the problems of indoor positioning systems and methods using reflected light of the related art that has a limitation that reflective surfaces should reflect the reflected light at respective frequencies different from each other and sensors satisfying sufficient sensitivity distances and communication speeds to detect the reflected light are required.

【Figure 3】

**Description**

**Technical Field**

The present disclosure relates to an indoor positioning system and a method thereof for accurately tracking a user's location indoors and, more particularly, to an indoor positioning system and a method thereof using reflected light, wherein the system and the method thereof are configured to accurately determine and track the user's location indoors where it is difficult for satellite signals to reach in order to solve the problems of location tracking devices and methods of the related art that have difficulty in accurately tracking the user's location due to the difficulty of satellite signals reaching indoors even though conventionally and generally various services such as map services or location-based services are provided by using satellite navigation systems such as a global location system (GPS), and as a result, there are limitations in realizing user location-based services that require a high-accuracy indoor positioning system, such as autonomous parking functions in underground parking lots, route finding in large indoor spaces like large shopping malls, and location-based advertising and entertainment.

In addition, as described above, the present disclosure relates to an indoor positioning system and a method thereof using reflected light, wherein the system and the method thereof are configured to accurately track a user's location indoors with a simpler configuration and lower cost than those of the related art by using the reflected light instead of wireless communication in order to solve the problems of wireless communication-based indoor positioning systems and methods of the related art that have not only a disadvantage in relatively low accuracy even though the user's location, which is based on a distance between a transmitter and receiver and a reception time of a wireless signal, may be calculated to accurately determine and track the user's location even indoors where it is difficult for satellite signals to reach on the basis of various radio frequency (RF) communications using satellites, beacons, Wi-Fi/Wireless LAN (WLAN), RFID, active RFID, mobile communication, Bluetooth, Ultra-WideBand (UWB), Zigbee, WiBro/WiMax, and broadcasting signals, but also a limitation requiring significant infrastructure construction costs due to a requirement of a plurality of transmitters and receivers to increase the accuracy of location measurement.

In addition, as described above, the present disclosure relates to an indoor positioning system and a method thereof using reflected light in order to accurately track a user's location indoors with a simpler configuration and lower cost than those of the related art by using the reflected light as described above, wherein the system and the method thereof are configured to use an optical signal transmitter and receiver and a reflector array composed of retroreflectors whose angle of incidence of each optical signal is equal to an angle of reflection thereof to calculate a distance to the reflector array on the basis of reception information of each optical signal and calculate an absolute location of the user on the basis of the distance information and absolute location information of each reflective surface of the reflector array, so as to solve the problems of indoor positioning systems and methods using reflected light of the related art that has a limitation that reflective surfaces should reflect the reflected light at respective frequencies different from each other and sensors satisfying sufficient sensitivity distances and communication speeds to detect the reflected light are required even though the user's location indoors may be determined through information about a distance from each reflective surface to the user as well as information about locations of three or more reflective surfaces formed to reflect incident optical signals into reflected light of frequencies (colors) different from each other, whereby the user's location indoors is accurately tracked with the simpler configuration and lower cost than those of the related art without requiring application of the reflected light of different frequencies for each reflective surface or developing separate sensors.

**Background Art**

Recently, due to the widespread use of personal portable information and communication devices such as smartphones, the user location-based service industry, which provides various kinds of content, advertisements, customized information, or the like on the basis of a user's current location, is growing rapidly.

In addition, in order to provide such user location-based services, it is essential to accurately determine a user's location, and in an instance where the user is outdoors, a global positioning system (GPS) may be utilized, which receives signals from a plurality of satellites, measures a distance from each satellite, and determines the user's location.

However, in an instance where a user is in an indoor environment, there is a limitation to utilizing positioning by using a global positioning system (GPS) due to difficulty of satellite signals reaching indoors. Accordingly, for example, in order to implement autonomous parking functions in underground parking lots and the like or provide services such as route finding using smartphones in large indoor spaces like airports or large shopping malls and location-based advertising and entertainment, an indoor positioning system with high accuracy without using GPS is required.

Accordingly, in order to track a user's location indoors, conventionally, for example, indoor positioning systems have been used, which are mainly configured by using radio frequency (RF) communication devices such as systems based on satellite, ground beacons, Wi-Fi/Wireless LAN (WLAN), RFID, active RFID, mobile communication, Bluetooth, UWB, Zigbee, WiBro/WiMax, and broadcasting signals.

More specifically, one of the most commonly used indoor location tracking methods is to use received signals to estimate a distance between a transmitter and a receiver and calculate a user's location. In this case, as for the signals, a variety of radio frequency signals are used, such as signals based on WiFi/Bluetooth, UWB, and mobile communications.

Here, WiFi/Bluetooth-based indoor positioning technology has an advantage that an infrastructure therefor may be constructed at a relatively low cost, but has a disadvantage of having a relatively low accuracy level (1 to 10 m). In contrast, UWB indoor positioning technology provides relatively high accuracy (10 cm to 1 m), but has a disadvantage of requiring significant infrastructure construction costs because a plurality of transmitters should be installed for location measurement.

In addition, since the existing radio signal-based indoor positioning technologies perform distance measurement by using radio signals based on Wi-Fi, Bluetooth (BLE), UWB, and others, there are problems that constructing an infrastructure therefor is difficult, continuous power consumption occurs, signal interference (in BLE) exists depending on radio wave characteristics, the number of multiple users (in UWB) is limited depending on distance measurement methods, and the like.

In order to solve such problems, conventionally, according to Korean Patent No. 10-2180304, "INDOOR POSITIONING SYSTEM USING REFLECTED LIGHT AND METHOD USING THE SAME", technical details are proposed for the system and the method thereof configured to determine a user's location in an indoor environment by using a terminal for transmitting and receiving optical signals and a plurality of reflective surfaces for reflecting the optical signals into reflected light of frequencies (wavelengths) different from each other, so as to measure the user's location indoors with a simpler configuration and lower cost compared to those of existing wireless communication-based indoor positioning systems and methods. However, the content of the related art as described above had the following limitations.

More specifically, in the above-described Korean Patent No. 10-2180304, "INDOOR POSITIONING SYSTEM USING REFLECTED LIGHT AND METHOD USING THE SAME", the system and the method thereof are configured to include: a reflection unit consisting of at least one reflective surface; and a user terminal for determining a user's location on the basis of distance information, wherein each reflective surface is configured to reflect incident optical signals into reflected light of frequencies (colors) different from each other, and the user's location indoors is configured to be determined through information about locations of three or more reflective surfaces and information about distances from the reflective surfaces to the user.

However, in the above-described Korean Patent No. 10-2180304, "INDOOR POSITIONING SYSTEM USING REFLECTED LIGHT AND METHOD USING THE SAME", the system and the method thereof have a limitation in that the reflective surfaces have to reflect reflected light at respectively different frequencies, and in order to put the system and the method thereof into practical use, sensors satisfying sufficient sensitivity distances and communication speeds are additionally required.

Accordingly, in order to solve the limitation of the indoor positioning systems and methods of the related art as described above, it is preferable to propose an indoor positioning system and a method thereof having a novel configuration that is configured to accurately track a user's location even indoors and simultaneously be implementable at the simpler configuration and lower cost than those of the related art. However, a device or method satisfying all such requirements has not yet been proposed.

[Documents of Related Art]

Korean Patent No. 10-2180304 (November 18, 2020)

**Disclosure**

**Technical Problem**

The present disclosure is proposed to solve the problems of the conventional technology as described above, and accordingly, an objective of the present disclosure is to propose an indoor positioning system and a method thereof using reflected light, wherein the system and the method thereof are configured to accurately determine and track the user's location indoors where it is difficult for satellite signals to reach in order to solve the problems of location tracking devices and methods of the related art that have difficulty in accurately tracking the user's location due to difficulty of satellite signals reaching indoors even though conventionally and generally various services such as map services or location-based services are provided by using satellite navigation systems such as a global location system (GPS), and as a result, there are limitations in realizing user location-based services that require a high-accuracy indoor positioning system, such as autonomous parking functions in underground parking lots, route finding in large indoor spaces like large shopping malls, and location-based advertising and entertainment.

In addition, as described above, in order to accurately determine and track a user's location even indoors where it is difficult for satellite signals to reach, another objective of the present disclosure is to propose an indoor positioning system and a method thereof using reflected light, wherein the system and the method thereof are configured to accurately track the user's location indoors with a simpler configuration and lower cost than those of the related art by using the reflected light instead of wireless communication in order to solve the problems of wireless communication-based indoor positioning systems and methods of the related art that have not only a disadvantage in relatively low accuracy even though the user's location, which is based on a distance between a transmitter and receiver and a reception time of a wireless signal, may be calculated on the basis of various radio frequency (RF) communications using satellites, beacons, Wi-Fi/Wireless LAN (WLAN), RFID, active RFID, mobile communication, Bluetooth, Ultra-Wide-Band (UWB), Zigbee, WiBro/WiMax, and broadcasting signals, but also a limitation requiring significant infrastructure construction costs due to a requirement of a plurality of transmitters and receivers to increase the accuracy of location measurement.

In addition, as described above, a yet another objective of the present disclosure is to propose an indoor positioning system and a method thereof using reflected light in order to accurately track a user's location indoors with a simpler configuration and lower cost than those of the related art by using the reflected light as described above, wherein the system and the method thereof are configured to use an optical signal transmitter and receiver and a reflector array composed of retroreflectors whose angle of incidence of each optical signal is equal to an angle of reflection thereof to calculate a distance to the reflector array on the basis of reception information of each optical signal and calculate an absolute location of the user on the basis of the distance information and absolute location information of each reflective surface of the reflector array, so as to solve the problems of indoor positioning systems and methods using reflected light of the related art that has a limitation that reflective surfaces should reflect the reflected light at respective frequencies different from each other and sensors satisfying sufficient sensitivity distances and communication speeds to detect the reflected light are required even though the user's location indoors may be determined through information about a distance from each reflective surface to the user as well as information about locations of three or more reflective surfaces formed to reflect incident optical signals into reflected light of frequencies (colors) different from each other, whereby the user's location indoors is accurately tracked with the simpler configuration and lower cost than those of the related art without requiring application of the reflected light of different frequencies for each reflective surface or developing separate sensors.

## Technical Solution

In order to achieve the above-described objectives, according to the present disclosure, there is provided an indoor positioning system using reflected light, characterized in that the system includes: a reflector array unit including a reflector array in which a plurality of retroreflectors whose angle of incidence of each optical signal is equal to an angle of reflection thereof is arranged in a predetermined number and at a predetermined interval; and a user terminal configured to perform a process of determining a location of a user by using the reflected light received through each reflector of the reflector array unit.

Here, the reflector array unit may be configured to allow each retroreflector to be installed at a predetermined location to form the reflector array.

Alternatively, the reflector array unit may be configured so that the reflector array in which each retroreflector is arranged in a predetermined arrangement and integrally formed is installed in a predetermined location.

Alternatively, the reflector array unit may include the plurality of retroreflectors formed in shapes different from each other by using corner cube retroreflectors (CCRs) of single prism type or using reflective tapes (films) such as prism array-type prism reflective tapes or micro glass bead-type glass bead reflective tapes, so as to be configured to enable detecting the reflector array through the shape of each of the retroreflectors and identifying each of the retroreflectors.

Alternatively, the system may further include a server configured to prestore location information about each of the reflectors of the reflector array unit and perform a process of transmitting corresponding information to the user terminal upon a request of the user terminal.

Alternatively, in the indoor positioning system, the location information about each of the reflectors of the reflector array may be prestored in the user terminal.

In addition, the user terminal may include: an optical signal transmission unit configured to perform a process of transmitting each optical signal according to predetermined settings; an optical signal reception unit configured to perform a process of receiving the optical signals reflected through the reflector array unit; a reflector detection unit configured to perform a process of identifying each reflector of the reflector array unit on the basis of the received optical signals; a distance calculation unit configured to perform a process of calculating a distance between the user terminal and the reflector array unit on the basis of reception information of the optical signals; a location determination unit configured to perform a process of calculating a location of the user terminal by using the calculated distance information and the location information of each reflector; and a data storage unit configured to perform a process of storing various data, which is obtained through the processing processes and processing results of the optical signal transmission unit, the optical signal reception unit, the reflector detection unit, the distance calculation unit, and the location determination unit, according to the predetermined settings.

Here, the user terminal may include: a detection sensor capable of receiving at least one of intensity, brightness, and saturation of the reflected light; and a distance sensor capable of calculating distances from the transmitted and received optical signals.

Alternatively, the user terminal may be configured by installing a dedicated application on a personal information and communication device, including a smartphone having a time of flight (TOF) camera function.

In addition, the reflector detection unit may be configured to perform a process of detecting the reflector array by using information about at least one of the intensity, brightness, saturation, and shape of the reflected light according to the predetermined settings on the basis of the optical signals received through the optical signal reception unit, and identifying each reflector by comparing relative distances between each reflector of the detected reflector array and actual distances between each reflector on the basis of the location information of the prestored reflector array.

In addition, the distance calculation unit may be configured to perform a process of calculating a distance from the user terminal to the reflector array by using the time of flight (TOF) method for calculating the distance by using a difference between a transmission time point and a reception time point on the basis of the reception information of the optical signals received through the optical signal reception unit.

Alternatively, the distance calculation unit may be configured to perform a process of calculating the distance from the user terminal to the reflector array unit by using carrier-phase measurement values of the received reflected optical signals on the basis of the reception information of the optical signals received through the optical signal reception unit.

In addition, the location determination unit may be configured to perform a process of calculating an absolute location of the user terminal by using a triangulation technique on the basis of the distance information calculated through the distance calculation unit and the prestored location information of the reflector array.

In addition, the indoor positioning system may be configured to perform a process of: storing the various data in the data storage means according to the predetermined settings, the various data including a location by time, a movement distance, and a movement time of the user, which are obtained through the respective processing processes and results of the optical signal transmission unit, the optical signal reception unit, the reflector detection unit, the distance calculation unit, and the location determination unit; transmitting the various data to the server or external device; building a database related to the user's location and movement for each user; and providing corresponding customized information upon the user's request received through the user terminal on the basis of the content of the database.

In addition, the indoor positioning system may be configured to allow the reflector array unit to include a plurality of reflector arrays with array types different from each other or be configured to assign predetermined identification information to each reflector array to enable identification of the plurality of reflector arrays, is configured to perform a process of installing the reflector arrays different from each other in respective indoor spaces so as to prestore location information about each reflector array on the server or a separate database and identifying a reflector array installed in a corresponding indoor space through the user terminal so as to determine a location, and thus is configured to accurately determine the user's location even in the indoor spaces including a plurality of floors or rooms.

In addition, according to the present disclosure, there is provided an indoor positioning method using reflected light, characterized in that the method is configured to determine a user's location indoors by using an indoor positioning system using the reflected light, which is described above and the method includes: an optical signal transmission step of performing a process of transmitting optical signals through an optical signal transmission unit of a user terminal of the indoor positioning system using the reflected light; an optical signal reception step of performing a process of receiving the optical signals transmitted through the optical signal transmission step and reflected from a reflector array unit of the indoor positioning system through an optical signal transmission unit of the user terminal; a reflector detection step of performing a process of detecting a reflector array and identifying each reflector through a reflector detection unit of the user terminal on the basis of the optical signals received in the optical signal reception step; a distance calculation step of performing a process of calculating a distance from the user terminal to each reflector through a distance calculation unit of the user terminal on the basis of identification results of the reflector detection step and the reception information of the optical signals; and a location determination step of performing a process of determining a location of the user terminal by using a triangulation technique through a location determination unit of the user terminal on the basis of each distance calculated through the distance calculation step and the location information of each reflective surface.

Here, the method may further include: a database building step of performing a process of building a database related to the user's location and movement for each user by transmitting various data to a server or an external device according to predetermined settings, the various data including a location by time, a movement distance, and a movement time of the user, which are obtained through the processing processes and results of the optical signal transmission step, the optical signal reception step, the reflector detection step, the distance calculation step, and the location determination step; and an information provision step of performing a process of providing corresponding customized information upon a user's request received through the user terminal on the basis of content of the database built through the database building step.

In addition, according to the present disclosure, there is provided a location information service provision system configured to provide location information to a user for both indoors and outdoors depending on the user's locations, characterized in that the system includes: an outdoor positioning unit configured to perform a process of providing outdoor location information of the user by using a location tracking device including a GPS; and an indoor positioning unit configured to perform a process of providing indoor location information of the user by using an indoor positioning system using reflected light, which is described above.

In addition, according to the present disclosure, there is provided a location information service provision method configured to provide location information to a user for both indoors and outdoors depending on the user's locations, characterized in that the method includes: an outdoor positioning step of performing a process of providing outdoor location information of the user by using a location tracking device including a GPS; and an indoor positioning step of performing a process of providing indoor location information of the user by using an indoor positioning system using reflected light, which is described above.

**Advantageous Effects**

As described above, according to the present disclosure, there is provided an indoor positioning system and a method thereof using reflected light, wherein the system and the method thereof are configured to use an optical signal transmitter and receiver and a reflector array composed of retroreflectors whose angle of incidence of each optical signal is equal to an angle of reflection thereof to calculate a distance to the reflector array on the basis of reception information of each optical signal and calculate an absolute location of a user on the basis of the distance information and absolute location information of each reflective surface of the reflector array, whereby the user's location indoors is accurately tracked with a simpler configuration and lower cost than those of the related art without requiring application of the reflected light of different frequencies for each reflective surface or developing separate sensors, and thus, solving the problems of indoor positioning systems and methods using reflected light of the related art that has limitations in which reflective surfaces should reflect the reflected light at respective frequencies different from each other and sensors satisfying sufficient sensitivity distances and communication speeds to detect this reflected light are required even though a user's location indoors may be determined through information about a distance from each reflective surface to the user as well as information about locations of three or more reflective surfaces formed to reflect incident optical signals into reflected light of frequencies (colors) different from each other.

In addition, according to the present disclosure, as described above, there is provided an indoor positioning system and a method thereof using reflected light, wherein the system and the method are configured to accurately track the user's location indoors with a simpler configuration and lower cost than those of the related art by using the reflected light, so as to solve the problems of wireless communication-based indoor positioning systems and methods of the related art that have not only a disadvantage in relatively low accuracy even though the user's location, which is based on a distance between a transmitter and receiver and a reception time of a wireless signal, may be calculated on the basis of various radio frequency (RF) communications using satellites, beacons, Wi-Fi/Wireless LAN (WLAN), RFID, active RFID, mobile communication, Bluetooth, Ultra-Wide-Band (UWB), Zigbee, WiBro/WiMax, and broadcasting signals, but also a limitation requiring significant infrastructure construction costs due to a requirement of a plurality of transmitters and receivers to increase the accuracy of location measurement, thereby enabling accurate tracking of a user's location indoors with the simpler configuration and lower cost than those of the related art by using reflected light instead of wireless communication.

In addition, according to the present disclosure, as described above, there is provided an indoor positioning system and a method thereof using reflected light, wherein the system and the method thereof are configured to accurately track a user's location indoors with a simpler configuration and lower cost by using the reflected light, so as to solve the problems of the existing GPS-based location tracking systems and methods of the related art that have difficulty in accurately tracking the user's location due to difficulty of satellite signals reaching indoors and has a consequent limitation in realizing various services based on the user's location, whereby the user's location may be accurately determined and tracked even indoors where it is difficult for satellite signals to reach, and accordingly, it is possible to more easily realize and provide user location-based services that requires a high-accuracy indoor positioning system, such as autonomous parking functions in underground parking lots, route finding in large indoor spaces like large shopping malls, and location-based advertising and entertainment.

In addition, according to the present disclosure, as described above, there is provided an indoor positioning system and a method thereof using reflected light, wherein the system and the method thereof are configured to accurately track a user's location indoors with a simpler configuration and lower cost than those of the related art by using the reflected light, whereby various information such as the user's location or escape route may be quickly and accurately identified and provided by installing a reflector array in an indoor space as an example even in conditions where securing visibility is difficult in emergency situations such as fire, and thus, there is an advantage of being widely usable in various fields such as firefighting and disaster relief.

## Description of Drawings

FIG. 1 is a conceptual view schematically illustrating the overall configuration of an indoor positioning system using reflected light in the related art.

FIG. 2 is a block diagram schematically illustrating a specific configuration of the indoor positioning system using reflected light of the related art shown in FIG. 1.

FIG. 3 is a conceptual view schematically illustrating the overall configuration of an indoor positioning system using reflected light according to an exemplary embodiment of the present disclosure.

FIG. 4 is a conceptual view schematically illustrating a configuration of a retroreflector applied to the indoor positioning system using reflected light according to the exemplary embodiment of the present disclosure.

FIG. 5 is a view schematically illustrating a configuration example of a reflector array unit of the indoor positioning system using reflected light according to the exemplary embodiment of the present disclosure.

FIG. 6 is a conceptual view schematically illustrating another configuration example of the indoor positioning system using reflected light according to the exemplary embodiment of the present disclosure shown in FIG. 3.

FIG. 7 is a view illustrating another configuration example of retroreflectors applied to the reflector array unit of the indoor positioning system using reflected light according to the exemplary embodiment of the present disclosure, and illustrating a configuration example of a reflector array type in which respective retroreflectors are implemented in shapes different from each other and a result of detecting a corresponding reflector array through an IR Camera.

FIG. 8 is a block diagram schematically illustrating the overall configuration of the indoor positioning system using reflected light according to the exemplary embodiment of the present disclosure.

FIGS. 9 to 11 are conceptual views schematically illustrating a processing process of detecting the reflector array and identifying each reflector in the reflector detection unit of the indoor positioning system using reflected light according to the exemplary embodiment of the present disclosure.

FIG. 12 is a flowchart schematically illustrating the overall configuration of an indoor positioning method using reflected light according to the exemplary embodiment of the present disclosure.

FIG. 13 is a view schematically illustrating an experimental environment of a verification experiment in order to verify actual performance of the indoor positioning system and the method thereof using reflected light according to the exemplary embodiment of the present disclosure.

FIGS. 14 and 15 are views illustrating the experimental results of the verification experiment in order to verify the actual performance of the indoor positioning system and the method thereof using reflected light according to the exemplary embodiment of the present disclosure.

## Best Mode

Hereinafter, with reference to the accompanying drawings, a specific exemplary embodiment of an indoor positioning system using reflected light according to the present disclosure will be described.

Here, it should be noted that the content described below is only one exemplary embodiment for realizing the present disclosure, and the present disclosure is not limited only to the content of the exemplary embodiment described below.

In addition, in the following description of the exemplary embodiment of the present disclosure, it should be noted that the detailed description has been omitted in order to simplify the description for parts that are identical or similar to the content of the related art or are determined to be easily understood and implemented at the level of those skilled in the art.

Subsequently, with reference to the drawings, specific details of the indoor positioning system and the method thereof using reflected light according to the present disclosure will be described.

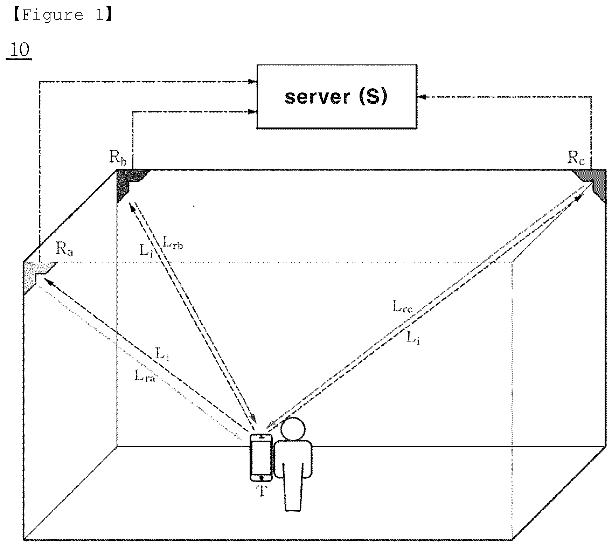

More specifically, first, referring to FIG. 1, FIG. 1 is a conceptual view schematically illustrating the overall configuration of an indoor positioning system 10 using reflected light in the related art.

As shown in FIG. 1, the existing indoor positioning system 10 using reflected light is roughly configured to include: a reflector R including a plurality of reflective surfaces Ra, Rb, and Rc; a server S for storing location information about each reflective surface; and a user terminal T for performing a process of determining a user's location.

Here, each reflective surface described above may be installed at a predetermined distance indoors in a building such as an airport, a shopping mall, and a general hospital. In this case, there is no limitation to installation locations, but it is preferable to install the reflective surfaces on the ceiling of the building so that optical signals are not blocked by obstacles such as pedestrians or furniture.

In addition, as shown in FIG. 1, in terms of location accuracy, it may be advantageous for the respective reflective surfaces to be distributed at corresponding corners of an indoor space, but the reflective surfaces may also be installed together in one place considering visibility.

More specifically, the respective reflective surfaces Ra, Rb, and Rc may be configured to reflect optical signals Li incident from a user terminal T at frequencies (wavelengths) different from each other, that is, as different colors (e.g., green, blue, and red) of reflected light Lra, Lrb, and Lrc. To this end, each of the reflective surfaces may be configured to include a filter formed to reflect only a specific frequency, or may be composed of a mirror coated with a color corresponding to a specific frequency.

Accordingly, as shown in FIG. 1, the optical signals Li output from the user terminal T are reflected as the reflected light Lra with green wavelength, reflected light Lrb with blue wavelength, and reflected light Lrc with red wavelength, respectively by a green-coated reflective surface Ra, a blue-coated reflective surface Rb, and a red-coated reflective surface Ra.

That is, the above-described reflector R is formed in a corner reflector structure that makes an incident angle and reflection angle of an optical signal the same, and may be configured to reflect incident light Li back in an incident direction. Through such a configuration, each reflected light Lra, Lrb, and Lrc returns towards the incident direction and reaches the user terminal T.

Here, in the exemplary embodiment shown in FIG. 1, a difference in frequencies of reflected light corresponding to visible light is described as a difference in colors of light, but it is not necessarily limited to such a configuration. That is, for example, respective reflective surfaces may also be configured to reflect infrared rays of frequencies different from each other by using optical signals such as infrared rays rather than visible rays.

In addition, the server S may be configured to store the location information of each of the reflective surfaces Ra, Rb, and Rc, and upon a user's request, may transmit the location information of each stored reflective surface to the user terminal T through a wireless network.

Here, in addition to simply storing the location information of the reflection unit, the server S may also be configured to directly determine the user's location by using input information or transmit the determined location to an external device, a surveillance center, or the like.

Alternatively, for example, the location information of each reflective surface may also be prestored in the user terminal T rather than the server S, or may also be configured such that a QR code (including the location information of each terminal) and the like attached indoors is read by using the user terminal T or the location information of each reflective surface may be manually input.

In addition, the user terminal T may also be configured with dedicated hardware configured to perform a process of transmitting and receiving optical signals to calculate a distance to each reflective surface and then using the user-to-reflective surface distance information and the location information of each reflective surface to determine the user's location, or may also be configured in a form that combines a light transmission/reception module with a commercialized electronic device such as a smartphone.

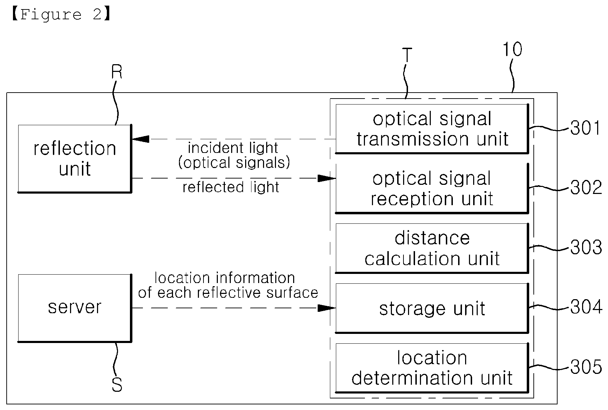

More specifically, FIG. 2 is a block diagram schematically illustrating a specific configuration of the indoor positioning system 10 using reflected light of the related art shown in FIG. 1.

As shown in FIG. 2, the indoor positioning system 10 using reflected light of the related art is configured to include a reflector R, a server S, and a user terminal T, wherein the above-described user terminal T may be configured to include an optical signal transmission unit 301, an optical signal reception unit 302, a distance calculation unit 303, a storage unit 304, and a location determination unit 305.

Here, the above-described optical signal transmission unit 301 may be configured to include, for example, an LED, a camera flash, etc. for outputting white light, and may also be configured to include an infrared output device in a case where infrared rays are used.

In addition, optical signals may determine the respective locations of a plurality of users in the same indoor space by including respective identification codes capable of identifying corresponding users, and may be configured to obtain desired gain values even at a long distance by using modulation or CDMA-type random code like GPS signals.

In addition, in order to determine the user's location by using the triangulation method, it is preferable that the number of reflective surfaces is three or more, but it is not necessarily limited thereto. That is, for example, in a case of one or two reflective surfaces, information that a user is located within a certain distance from the reflective surfaces is obtainable. Alternatively, in a case where the user's height (i.e., a position on a z-axis) is known, the user's location may be specified simply by determining a location on a two-dimensional plane, so the user's exact location may be known even when there are just two reflective surfaces.

In addition, when an indoor space is a one-dimensional environment such as a long hallway, the user's approximate location may be determined with just one reflective surface. When a method of estimating a location by using the signal strength of an existing AP or mobile network is used in combination, a location may be determined even when there are one or two reflective surfaces.

In addition, the optical signal reception unit 302 receives reflected light of frequencies different from each other reflected from respective reflective surfaces and detects optical signals of the frequencies different from each other separately, and to this end, may be implemented with an image sensor, a photo-diode, a color sensor, etc.

That is, taking a case of the configuration shown in FIG. 1 as an example, the above-described optical signal reception unit 302 may be configured to detect green light Lra, blue light Lrb, and red light Lrc, respectively, so as to transmit information about time points at which the optical signals arrived to the distance calculation unit 303.

In addition, the distance calculation unit 303 calculates distances from the user terminal T to the respective reflective surfaces on the basis of the information obtained from the reflected optical signals received by the optical signal reception unit 302. To this end, the above-described distance calculation unit 303 may be configured to calculate the distances from the user terminal T to the respective reflective surfaces Ra, Rb, and Rc on the basis of time differences between a time point at which the optical signal transmission unit 301 transmits the optical signals and a time point at which the optical signal reception unit 302 receives the reflected light.

Alternatively, the distance calculation unit 303 may be configured to calculate the distances from the user terminal to the respective reflective surfaces by using carrier-phase measurement values of the reflected optical signals received by the reflection unit R. Moreover, as long as the distances between the transmission unit and the respective reflective surfaces may be calculated by receiving reflected light, various methods may be used without being limited to a specific method and means thereof.

Here, as for more specific content of a processing process of receiving reflected light and calculating a distance between the transmission unit and each reflective surface as described above, the content is just a matter that is obvious to those skilled in the art by referring to the content of distance measurement systems and methods of the related art or existing location tracking systems and methods such as the triangulation method or time difference of arrival (TDOA) method, so it should be noted that the present disclosure omits the detailed descriptions of content in order to simplify the description, which is self-evident for those skilled in the art from the content of the related art as described above, or may be easily understood and implemented by those skilled in the art by referring to literature and the like of the related art.

Accordingly, from the configuration described above, even indoors where GPS is not available, a user's location may be determined by way of using reflected light to obtain the distance information between the user and each reflective surface through a transmission and reception time difference of an optical signal and using the location information of each of the reflective surfaces prestored in the server to calculate the user's location through the triangulation method. However, the indoor positioning system 10 using reflected light of the related art as described above is required to have three or more reflective surfaces configured to reflect incident optical signals into reflected light of frequencies (colors) different from each other, and to this end, is configured to include a filter for reflecting only a specific frequency or a mirror coated with a color corresponding to the specific frequency, thereby causing a disadvantage in that a configuration of a reflector is relatively complicated and cost thereof increases.

In addition, the indoor positioning system 10 using reflected light of the related art described above additionally requires relatively high-performance sensors satisfying sufficient sensitivity distances and communication speeds in order to calculate a location by separately distinguishing reflected light that is different from each other and received from the reflective surfaces, thereby also having a limitation that make it difficult to put this system into practical use at low cost.

Accordingly, in order to solve the problems of the indoor positioning system 10 using reflected light of the related art as described above, as described later, the present inventors proposed the indoor positioning system and the method thereof using reflected light, the system and the method thereof having a novel configuration thereof configured to accurately track a user's location indoors with a simpler configuration and lower cost than the existing ones.

Here, in the exemplary embodiment of the present disclosure described below, it should be noted that the detailed description has been omitted in order to exclude redundant content and simplify the description with regard to the content that is the same or similar to that of the indoor positioning system 10 using the reflected light of the related art shown in FIGS. 1 and 2 and the content that is obvious to those skilled in the art with reference to the content of the related art as described above or that may be easily understood and implemented by those skilled in the art with reference to the literature and the like of the related art.

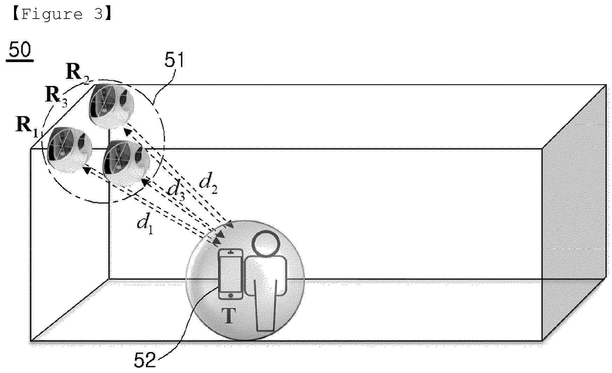

More specifically, FIG. 3 is a conceptual view schematically illustrating the overall configuration of an indoor positioning system 50 using reflected light according to the exemplary embodiment of the present disclosure.

As shown in FIG. 3, the indoor positioning system 50 using reflected light according to the exemplary embodiment of the present disclosure is roughly configured to include: a reflector array unit 51 including a plurality of reflectors R1, R2, and R3; a user terminal 52 configured to perform a process of determining a user's location by using the reflected light received through each reflector; and a server 53 for storing location information of each of the reflectors.

Here, the above-described reflector array unit 51 may be configured to include a reflector array provided with two or more retroreflectors arranged therein at predetermined intervals and in predetermined shapes by using the retroreflectors having a characteristic that the incident angle and reflection angle of each optical signal are the same.

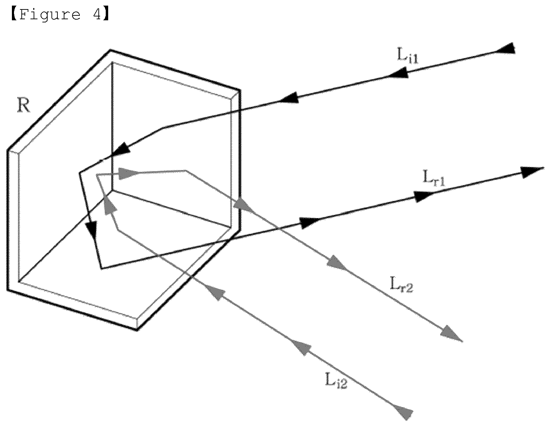

That is, referring to FIG. 4, FIG. 4 is a conceptual view schematically illustrating a configuration of a retroreflector applied to the reflector array unit 51 of the indoor positioning system 50 using reflected light according to the exemplary embodiment of the present disclosure.

As shown in FIG. 4, in the above-described reflector array unit 51, two or more retroreflectors R having the characteristic whose angle of incidence of each optical signal is equal to an angle of reflection thereof are arranged and configured in a specific predetermined arrangement, and preferably, may be configured with a reflector array in which three retroreflectors are arranged.

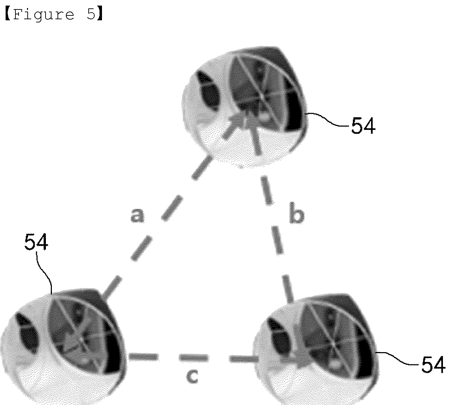

That is, referring to FIG. 5, FIG. 5 is a view schematically illustrating a configuration example of the reflector array unit 51 of the indoor positioning system 50 using reflected light according to the exemplary embodiment of the present disclosure.

As shown in FIG. 5, the above-described reflector array unit 51 may be configured with, for example, a reflector array having a triangular shape thereof and including three retroreflectors 54 arranged at predetermined intervals.

Moreover, in addition to the characteristic of light reflecting in an incident direction thereof, a retroreflector has the characteristic of relatively low signal loss of a retroreflected optical signal due to the reflection characteristic (i.e., the reflectivity) of a mirror, so the reflector array unit 51 is configured by using the retroreflectors as described above, whereby each optical signal transmitted from the user terminal 52 may be received back to the user terminal 52 with sufficient intensity, and accordingly, robust optical signal reception may be enabled regardless of user's locations.

Here, in the exemplary embodiment shown in FIG. 5, the present disclosure is shown by taking the case where three retroreflectors 54 are arranged in a triangular shape in the reflector array 51 as an example, but it should be noted that the present disclosure is not necessarily limited to such a configuration only. That is, there are no particular limitations on the shape or structure of the retroreflectors 54 as long as they have the characteristic of reflecting incident light in the same direction, and there are also no particular limitations on the array configuration of the reflector array unit 51.

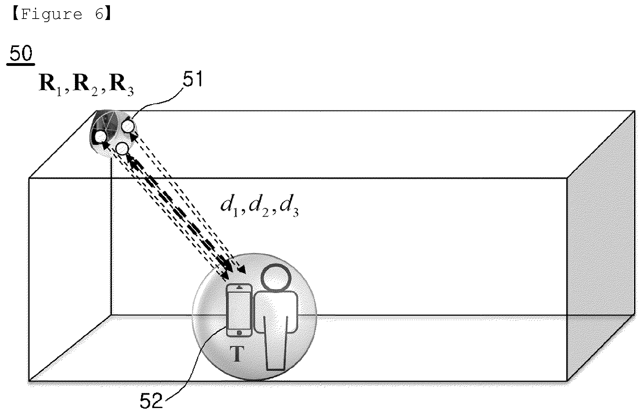

That is, referring to FIG. 6, FIG. 6 is a conceptual view schematically illustrating another configuration example of the indoor positioning system 50 using reflected light according to the exemplary embodiment of the present disclosure shown in FIG. 4.

As shown in FIGS. 3 and 6 respectively, for example, the reflector array unit 51 may also be configured by three retroreflectors 54 each installed at a predetermined specific location as shown in FIG. 3, or may also be configured in the form of a reflector array in which three integrally formed retroreflectors 54 are arranged in a predetermined arrangement as shown in FIG. 6.

In addition, it should be noted that the embodiment of the present disclosure may be configured in various ways as required, such as that in the indoor positioning system 50 using reflected light according to the exemplary embodiment of the present disclosure, the above-described reflector array 51 may also be configured to include a reflector array in which a plurality of retroreflectors 54 formed in shapes different from each other, such as a triangle, a square, a circle, and a cross, is arranged in a predetermined number and shape thereof.

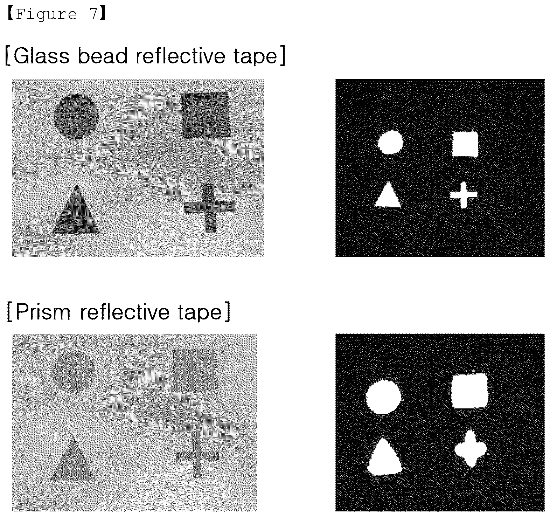

That is, referring to FIG. 7, FIG. 7 is a schematic view illustrating another configuration example of retroreflectors 54 applied to the reflector array unit 51 of the indoor positioning system 50 using reflected light according to the exemplary embodiment of the present disclosure.

Here, a view in the left side of FIG. 7 shows a configuration example of a reflector array type in which respective retroreflectors are realized in shapes different from each other, and a view in the right side of FIG. 7 shows the result of detecting a corresponding reflector array through an IR Camera.

As shown in FIG. 7, for example, by using corner cube retroreflectors (CCRs) of single prism type or using reflective tapes (films) such as prism array-type prism reflective tapes or micro glass bead-type glass bead reflective tapes, the retroreflectors 54 described above may be configured such that the retroreflectors formed in shapes different from each other such as a circle, a triangle, a square, or a cross are arranged in a reflector array and an infrared camera or the like is used to detect the reflector array through the shapes of the respective reflector components and to enable identifying an ID of each reflector component.

Alternatively, it should be noted that without a special limitation, the present disclosure is applicable to various types of retroreflectors, such as that the above-described reflector array unit 51 may also be configured to enable reflector identification by using a particular reflector, which combines a reflector and an optical modulator, such as a modulated retroreflector (MRR) type retroreflector and modulating reflected light of each reflector component.

In addition, information on absolute location (i.e., coordinate) of each retroreflector 54 may be configured to be prestored in the server 53 and transmitted to the user terminal 52 of a corresponding user when the user's location is measured.

Alternatively, the present disclosure may also be configured such that the absolute location (i.e., coordinates) information of each retroreflector 54 is stored in the user terminal 52 or a separate storage means instead of the server 53 or is input directly from the user or the outside. Accordingly, it should be noted that the present disclosure is not necessarily limited to the configuration proposed in the exemplary embodiment of the present disclosure, but may be configured through various modifications and changes as required by those skilled in the art without departing from the spirit and essence of the present disclosure.

In addition, as in the existing system shown in FIG. 1, the above-described reflector array unit 51 may be installed indoors in a building such as an airport, a shopping mall, and a department store, and there are no special limitations on installation locations, but it is preferable to install the reflector array unit 51 on the ceiling of the building so that optical signals are not blocked by pedestrians or furniture.

In addition, in order to determine a user's three-dimensional location, it is preferable to install a reflector array consisting of three or more retroreflectors 54, but in a case where the user's height (i.e., a position on the z-axis) is known, an exact location may also be determined by using the reflector array consisting of two retroreflectors 54.

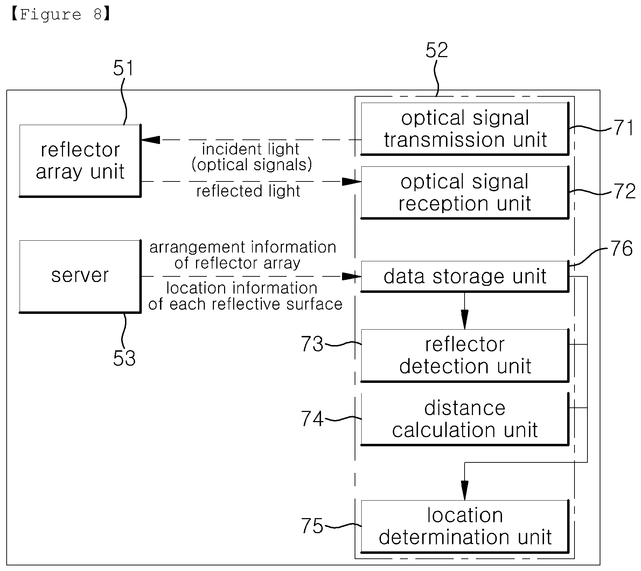

More specifically, FIG. 8 is a block diagram schematically illustrating the overall configuration of the indoor positioning system 50 using reflected light according to the exemplary embodiment of the present disclosure.

As shown in FIG. 8, the indoor positioning system 50 using reflected light according to the exemplary embodiment of the present disclosure may be configured to include a reflector array unit 51, a user terminal 52, and a server 53. In this case, the user terminal 52 described above may be roughly configured to include: an optical signal transmission unit 71 configured to perform a process of transmitting optical signals; an optical signal reception unit 72 configured to perform a process of receiving the optical signals reflected through the reflector array unit 51; a reflector detection unit 73 configured to perform a process of identifying each reflector of the reflector array unit 51 on the basis of the received optical signals; a distance calculation unit 74 configured to calculate a distance between the user terminal 52 and the reflector array unit 51 on the basis of reception information of the optical signals; a location determination unit 75 configured to calculate an absolute location of the user terminal 52 by using the calculated distance information and the absolute location information of each reflector; and a data storage unit 76 configured to store various data obtained through the processing processes and results of each unit described above according to predetermined settings.

Here, the above-described user terminal 52 may be configured with dedicated hardware interworking with the server 53. However, preferably, the user terminal 52 may be configured by installing a dedicated application implemented to perform processing as described later in an information and communication terminal, which is portable, such as a smartphone or tablet PC, or in an information processing device such as a PC or laptop, thereby being configured with a simpler configuration and lower cost without requiring implementation of separate hardware.

In addition, it should be noted that the above-described user terminal 52 is not necessarily limited to the configuration proposed in the exemplary embodiment of the present disclosure, but there is no particular limitations in its specific configurations as long as the user terminal 52 includes a sensor capable of receiving the intensity, brightness, saturation, etc. of reflected light and a sensor capable of calculating a distance by using transmitted and received optical signals.

More specifically, first, the above-described optical signal transmission unit 71 may be configured to perform a process of transmitting, for example, optical signals of infrared light, visible light, a laser, etc., or signals modulated to such optical signals.

In addition, the above-described optical signal reception unit 72 may be configured to perform a process of measuring information such as the intensity and reception time of each optical signal received according to predetermined settings, and transmitting the information to the reflector detection unit 73 and distance calculation unit 74 by using an optical signal reception sensor including an infrared camera, a depth camera, a time of flight (ToF) sensor, etc.

That is, each of the optical signal transmission unit 71 and the optical signal reception unit 72 described above may be configured by using an information and communication device such as a ToF camera or a smartphone having a ToF camera function.

In addition, the above-described reflector detection unit 73 may be configured to perform a process of detecting the reflector array by using the intensity, brightness, saturation, shape, etc. of reflected light on the basis of the optical signals received through the optical signal reception unit 72, and identifying each reflective surface (i.e., each retroreflector 54) by using the reflector array arrangement information prestored in the server 53.

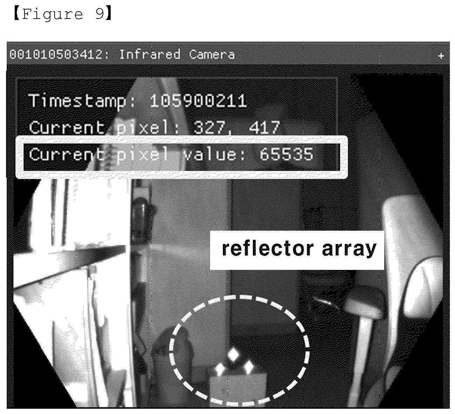

That is, referring to FIGS. 9 to 11, FIGS. 9 to 11 are conceptual views schematically illustrating a processing process of detecting a reflector array and identifying each reflector in the reflector detection unit 73 of the indoor positioning system 50 using reflected light according to the exemplary embodiment of the present disclosure.

More specifically, first, as shown in FIG. 9, the process of identifying each reflector may detect the reflector array by way of measuring the intensity of each optical signal from an IR image captured by using a TOF camera, and detecting a point having a large change in light intensity (i.e., a point with a large change in brightness).

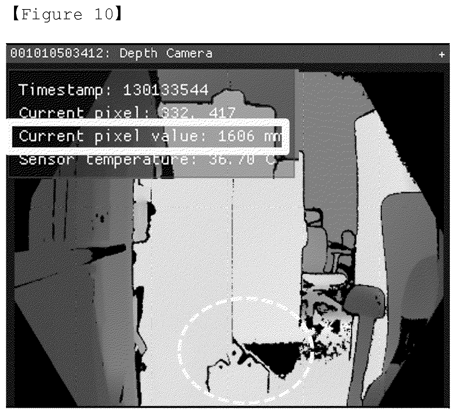

In this case, as shown in FIG. 10, since the TOF image includes distance information of each pixel, the distance information of each reflector may be obtained when the reflector array is detected.

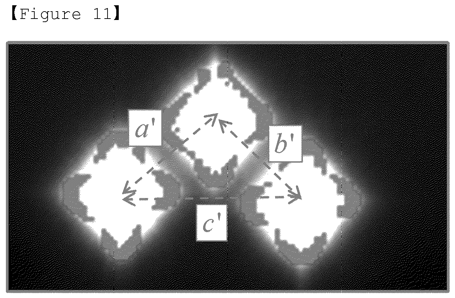

In addition, as shown in FIG. 11, when the reflector array is detected from the optical signals received through the optical signal reception unit 72, information about relative distances a', b', and c' between the reflectors may be obtained from each detected reflector, and information about actual distances a, b, and c between the reflectors may be obtained on the basis of the reflector array absolute location information, which is prestored in the server 53.

Accordingly, identifying that respective reflectors desired to know correspond to which reflectors is possible by comparing (matching) the relative distances a', b', and c' between the reflectors with the actual distances a, b, and c between each reflector, the distances being obtained as described above, thereby identifying that the distance information of respective reflectors come from which distance information of reflectors.

In addition, the above-described distance calculation unit 74 may be configured to perform a process of calculating a distance from the user terminal 52 to the reflector array unit 51 as described later on the basis of the reception information of each optical signal received through the optical signal reception unit 72.

In addition, the above-described location determination unit 75 may be configured to perform a process of calculating an absolute location of the user terminal 52 by using a triangulation technique or the like on the basis of the distance information calculated through the distance calculation unit 74 and the absolute location information of each reflective surface of the reflector array, the absolute location information being stored in the server 53 or the data storage unit 76.

That is, as the method of calculating the distance information by using the received optical signals as described above, first, for example, there is a time of flight (TOF) method for calculating a distance by using a difference between a transmission time point and a reception time point.

More specifically, when a time point at which an optical signal is output is t1, a time point at which the optical signal is detected is t2, and the speed of light is c, a distance may be expressed as [Equation 1] below.

$$[\text{Equation 1}]$$

$$d = \frac{1}{2}(t_c - t_1)\,c$$

Alternatively, as another method, there is a method of calculating a distance by using carrier-phase measurement values of received reflected optical signals, and the carrier-phase measurement values of the reflected optical signals may be modeled as shown in [Equation 2] below.

$$[\text{Equation 2}]$$

$$\Phi_i = d_i + n_i\,\lambda$$

Subsequently, when unspecified numbers in the carrier measurement values are determinable as described above, distance information may be obtained from the carrier-phase measurement values, and the determination of the unspecified numbers may be performed by using a method, which is used in carrier-phase differential GPS (CDGPS), RTK, PPP, and others of a satellite navigation system.

As described above, it should be noted that the transmission/reception time difference, TOF, carrier-phase measurement values, etc. may be used as the method of calculating the distance as an example, and more specific details of such a distance calculation method or triangulation technique are self-evident to those skilled in the art through the content of the related art, etc., so the detailed description thereof has been omitted here.

That is, due to the existing indoor positioning systems and methods that measure distances by using radio signals of Wi-Fi, Bluetooth (BLE), UWB, etc., there are problems that building an infrastructure is difficult, continuous power consumption occurs, signal interference (in BLE) exists depending on radio wave characteristics, the number of multiple users (in UWB) is limited depending on distance measurement methods, and the like. However, according to the present disclosure, as described above, it is configured to perform a distance measurement process in the so-called "one-way ranging" method by using the reflective properties of light and retroreflectors, so that distance calculation is enabled by using a ToF sensor only, whereby there is no limit to the number of multiple users while providing high accuracy at a lower cost than those of the related art, and thus, versatility and practicality may be increased.

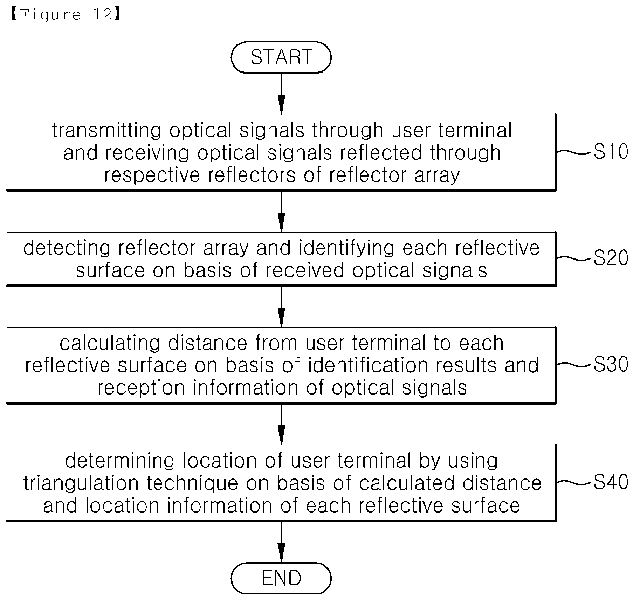

As described above, the indoor positioning system 50 using reflected light according to the exemplary embodiment of the present disclosure is implementable. Subsequently, referring to FIG. 12, FIG. 12 is a flowchart schematically illustrating the overall processing process of the indoor positioning method using the indoor positioning system 50 using reflected light according to the exemplary embodiment of the present disclosure shown in FIGS. 3 to 11.

As shown in FIG. 12, according to the exemplary embodiment of the present disclosure, an indoor positioning method using reflected light is roughly configured to include: an optical signal transmission and reception step S10 of performing a process of transmitting optical signals through an optical signal transmission unit 71 of a user terminal 52 and receiving the optical signals reflected through respective retroreflectors 54 of a reflector array unit 51 through an optical signal reception unit 72 of the user terminal 52; a reflector detection step S20 of performing a process of detecting a reflector array and identifying each reflective surface (i.e., each refroreflector 54) through a reflector detection unit 73 of the user terminal 52 on the basis of the optical signals received; a distance calculation step S30 of performing a process of calculating a distance from the user terminal 52 to each reflective surface through a distance calculation unit 74 of the user terminal 52 on the basis of identification results of the reflector detection step S20 and the reception information of the optical signal; and a location determination step S40 of performing a process of determining a location of the user terminal by using a triangulation technique and the like through a location determination unit 75 of the user terminal 52 on the basis of each distance calculated through the distance calculation step S30 and the location information of each reflective surface.

Here, although not shown, the indoor positioning system 50 and the method thereof using reflected light according to the exemplary embodiment of the present disclosure may be configured to perform a process of transmitting various data including a location by time, a movement distance, a movement time, etc. of the user, which are obtained through the processing process and result of each of the above steps, to the server 53, so as to build a database related to the user location and movement for each user and provide corresponding customized information upon the user's request received through the user terminal 52.

In addition, in the above-described exemplary embodiment of the present disclosure, although the present disclosure has been described by taking the case where the absolute location information of each retroreflector 54 of the reflector array unit 51 is stored in the server 53 as an example, the present disclosure is not necessarily limited to the content proposed in the exemplary embodiment. That is, for example, the present disclosure may be configured such that the above-described absolute location information is stored in the data storage unit 76 of the user terminal 52 or a separate storage means instead of the server 53, or may be input directly from the user or the outside. Accordingly, it should be noted that the present disclosure may be modified and changed in various ways by those skilled in the art as required without departing from the spirit and essence of the present disclosure.

In addition, in the above-described exemplary embodiment of the present disclosure, the present disclosure is described by taking the case of determining the user's location in a single indoor space, but in addition to this, according to the present disclosure, for example, the embodiment of the present disclosure may be configured to accurately determine the user's location even in a building, such as a high-rise building, with a plurality of floors or independent spaces.

That is, for example, the reflector array unit 51 is configured by forming a plurality of reflector arrays having array shapes thereof different from each other, and the different reflector arrays are installed for each floor or space to store location information for each reflector array into the server 53, a separate database, or the like, whereby which place and which floor the user is located may be easily determined by identifying a corresponding reflector array through the user terminal 52.

Alternatively, it should be noted that instead of forming each reflector array differently, the present disclosure may be configured in various ways as required, such that it is also configured to enable identifying each reflector array by assigning predetermined specific identification information to each reflector array.

From the above-described configuration, according to the present disclosure, an optical signal transmitter and optical signal receiver, which are required for an indoor positioning system using reflected light, and image sensors required to detect a reflector array may be purchased at a relatively low price and the configuration and installation process of the reflector array is also simple, so a low-cost indoor navigation system may be realized more easily than before by reducing the production and installation costs of the overall system.

In addition, according to the present disclosure, recently, for example, information and communication devices, which are equipped with standard sensors required to build an indoor positioning system using reflected light, such as smartphones equipped with a TOF camera function are widely distributed, so when the above-described user terminal 52 is configured with a smartphone equipped with the TOF camera function, the indoor positioning system may be built more simply and easily by just installing a retroreflector array in an indoor environment, whereby the accessibility and usability of the indoor positioning system may be further improved.

In addition, according to the present disclosure, a centimeter-level accurate and precise indoor positioning system may be easily implemented with a simpler configuration and lower cost than those of the existing systems through distance information calculated by using TOF, carrier-phase measurement, etc.

In addition, the embodiment according to the present disclosure is configured to determine user's locations both outdoors and indoors in combination with the existing location tracking devices and methods such as GPS, whereby a location information service provision system and a method thereof capable of providing user location information for both indoors and outdoors may be easily implemented.

In addition, the embodiment according to the present disclosure is configured to accurately track a user's location indoors by using reflected light with the simpler configuration and lower cost as described above, so that for example, by installing a reflector array in an indoor space, various information such as the user's location or escape route may be quickly and accurately identified and provided even in conditions where securing visibility is difficult in emergency situations such as fire, thereby having an advantage of being widely usable in various fields such as firefighting and disaster relief.

As described above, the indoor positioning system 50 and the method thereof using reflected light according to the exemplary embodiment of the present disclosure is implementable. Subsequently, the actual performance of the indoor positioning system 50 and the method thereof using reflected light according to the exemplary embodiment of the present disclosure configured as described above will be described for what was verified through an experiment.

That is, in order to verify the actual performance of the indoor positioning system 50 and the method thereof using reflected light according to the exemplary embodiment of the present disclosure configured as described above, the present inventors implemented the indoor positioning system 50 using reflected light as described above and performed location measurement in a laboratory environment.

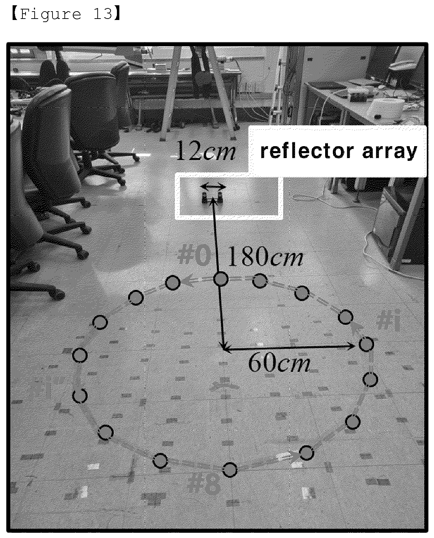

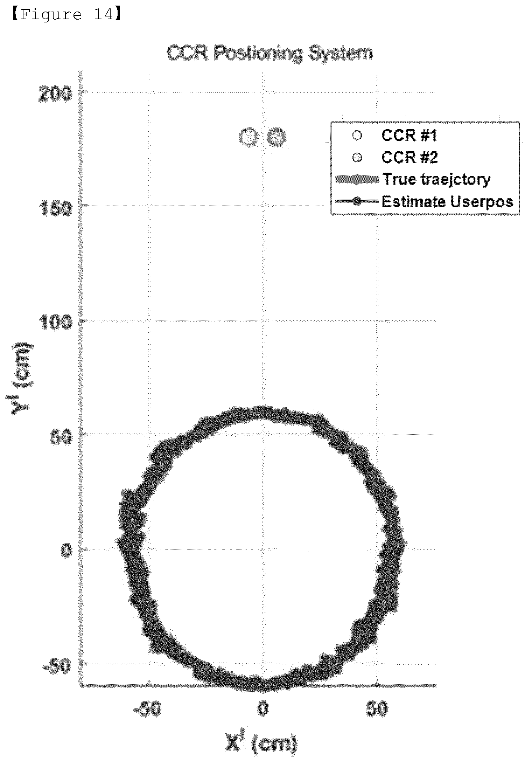

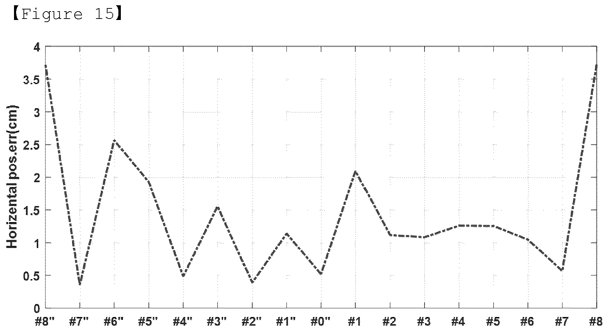

More specifically, referring to FIGS. 13 to 15, FIG. 13 is a view schematically illustrating the experimental environment of the verification experiment in order to verify the actual performance of the indoor positioning system 50 and the method thereof using reflected light according to the exemplary embodiment of the present disclosure, and FIGS. 14 and 15 are views illustrating the experimental results of the verification experiment in order to verify the actual performance of the indoor positioning system 50 and the method thereof using reflected light according to the exemplary embodiment of the present disclosure.

As shown in FIG. 13, the present inventors installed a reflector array indoors in Room 501, Building 312, Seoul National University as an experiment location, and Microsoft's Azure Kinect (i.e., an infrared camera used as an TOF sensor) was applied as measurement equipment for the experiment.

In this case, a distance between the reflector array and the experimental equipment is 1.2 m to 2.4 m, the number of reflectors in the reflector array is two, and distances between the reflectors in the reflector array is 12 cm. Location measurement was performed at each predetermined measurement point while moving along a circle indicated by the dotted line in FIG. 13. For accuracy analysis, Horizontal Pos. RMSE (2-Dim.) was applied so that a root mean square error in a horizontal plane was calculated for each measurement point.

As a result of the experiment, as shown in FIGS. 14 and 15, an average error was measured at the level of 1.32 cm. Therefore, from such a result, it may be confirmed that the indoor positioning system 50 and the method thereof using reflected light according to the exemplary embodiment of the present disclosure is able to be put into practical use as a centimeter-level high-accuracy indoor positioning system.

In addition, the above-described Azure Kinect device may be replaced by a smartphone equipped with a TOF camera function, and therefore, the embodiment of the present disclosure is able to build an indoor navigation system just by installing a ToF IR camera and a reflector array, thereby having the advantage that implementing a low-cost indoor positioning infrastructure is realizable.

Therefore, as described above, the indoor positioning system and the method thereof using reflected light according to the present disclosure is implementable, whereby according to the present disclosure, the user's location indoors may be accurately tracked with the simpler configuration and lower cost than those of the existing systems and methods by using the reflector array configured with the retroreflectors whose angle of incidence of each optical signal is equal to an angle of reflection thereof as well as the optical signal transmission and reception device such as the TOF camera. Moreover, for example, it is possible to more easily implement and provide user location-based services, which require a high-accuracy indoor positioning system, such as autonomous parking functions in underground parking lots and the like, route finding in large indoor spaces like large shopping malls, location-based advertising and entertainment, and at the same time, there is provided the advantage of being widely used in various fields such as firefighting and disaster relief.

In the above, the details of the indoor positioning system and the method thereof according to the present disclosure have been described through the exemplary embodiment of the present disclosure as described above, but the present disclosure is not limited only to the content described in the above exemplary embodiment. Therefore, it is natural that the present disclosure may be variously modified, changed, combined, replaced, and the like according to design requirements and other various factors by those skilled in the art to which the present disclosure belongs.

<Description of the Reference Numerals in the Drawings>

     10. indoor positioning system using reflected light
     Ra, Rb, Rc. reflective surfaces
     R. reflection unit
     S. server
     T. user terminal
     301. optical signal transmission unit
     302. optical signal reception unit
     303. location calculation unit
     304. storage unit
     305. location determination unit
     50. indoor positioning system using reflected light
     51. reflector array unit
     52. user terminal
     53. server
     54. retroreflector
     71. optical signal transmission unit
     72. optical signal reception unit
     73. reflector detection unit
     74. distance calculation unit
     75. location determination unit
     76. data storage

**Claims**

1. An indoor positioning system using reflected light, **characterized in that** the system comprises:

     a reflector array unit comprising a reflector array in which a plurality of retroreflectors whose angle of incidence of each optical signal is equal to an angle of reflection thereof is arranged in a predetermined number and at a predetermined interval; and

a user terminal configured to perform a process of determining a location of a user by using the reflected light received through each reflector of the reflector array unit.

2. The system of claim 1, **characterized in that** the reflector array unit is configured to allow each retroreflector to be installed at a predetermined location to form the reflector array.

3. The system of claim 1, **characterized in that** the reflector array unit is configured so that the reflector array in which each retroreflector is arranged in a predetermined arrangement and integrally formed is installed in a predetermined location.

4. The system of claim 1, **characterized in that** the reflector array unit comprises the plurality of retroreflectors formed in shapes different from each other by using corner cube retroreflectors (CCRs) of single prism type or using reflective tapes (films) such as prism array-type prism reflective tapes or micro glass bead-type glass bead reflective tapes, so as to be configured to enable detecting the reflector array through the shape of each of the retroreflectors and identifying each of the retroreflectors.

5. The system of claim 1, **characterized in that** the method further comprises:
a server configured to prestore location information about each of the reflectors of the reflector array unit and perform a process of transmitting corresponding information to the user terminal upon a request of the user terminal.

6. The system of claim 1, **characterized in that**, in the indoor positioning system, the location information about each of the reflectors of the reflector array is prestored in the user terminal.

7. The system of claim 1, **characterized in that** the user terminal comprises:

an optical signal transmission unit configured to perform a process of transmitting each optical signal according to predetermined settings;
an optical signal reception unit configured to perform a process of receiving the optical signals reflected through the reflector array unit;
a reflector detection unit configured to perform a process of identifying each reflector of the reflector array unit on the basis of the received optical signals;
a distance calculation unit configured to perform a process of calculating a distance between the user terminal and the reflector array unit on the basis of reception information of the optical signals;
a location determination unit configured to perform a process of calculating a location of the user terminal by using the calculated distance information and the location information of each reflector; and
a data storage unit configured to perform a process of storing various data, which is obtained through the processing processes and processing results of the optical signal transmission unit, the optical signal reception unit, the reflector detection unit, the distance calculation unit, and the location determination unit, according to the predetermined settings.

8. The system of claim 7, **characterized in that** the user terminal comprises:

a detection sensor capable of receiving at least one of intensity, brightness, and saturation of the reflected light; and
a distance sensor capable of calculating distances from the transmitted and received optical signals.

9. The system of claim 7, **characterized in that** the user terminal is configured by installing a dedicated application on a personal information and communication device, comprising a smartphone having a time of flight (TOF) camera function.

10. The system of claim 7, **characterized in that** the reflector detection unit is configured to perform a process of detecting the reflector array by using information about at least one of the intensity, brightness, saturation, and shape of the reflected light according to the predetermined settings on the basis of the optical signals received through the optical signal reception unit, and identifying each reflector by comparing relative distances between each reflector of the detected reflector array and actual distances between each reflector on the basis of the location information of the prestored reflector array.

11. The system of claim 7, **characterized in that** the distance calculation unit is configured to perform a process of calculating a distance from the user terminal to the reflector array by using the time of flight (TOF) method for calculating the distance by using a difference between a transmission time point and a reception time point on the basis of the reception information of the optical signals received through the optical signal reception unit.

12. The system of claim 7, **characterized in that** the distance calculation unit is configured to perform a process of calculating the distance from the user terminal to the reflector array unit by using carrier-phase measurement values of the received reflected optical signals on the basis of the reception information of the optical signals received through the optical signal reception unit.

13. The system of claim 7, **characterized in that** the location determination unit is configured to perform a process of calculating an absolute location of the user terminal by using a triangulation technique on the basis of the distance information calculated through the distance calculation unit and the prestored location information of the reflector array.

14. The system of claim 7, **characterized in that** the indoor positioning system is configured to perform a process of:

storing the various data in the data storage means according to the predetermined settings, the various data comprising a location by time, a movement distance, and a movement time of the user, which are obtained through the respective processing processes and results of the optical signal transmission unit, the optical signal reception unit, the reflector detection unit, the distance calculation unit, and the location determination unit;

transmitting the various data to the server or external device;

building a database related to the user's location and movement for each user; and

providing corresponding customized information upon the user's request received through the user terminal on the basis of the content of the database.

15. The system of claim 1, **characterized in that** the indoor positioning system is configured to allow the reflector array unit to comprise a plurality of reflector arrays with array types different from each other or be configured to assign predetermined identification information to each reflector array to enable identification of the plurality of reflector arrays, is configured to perform a process of installing the reflector arrays different from each other in respective indoor spaces so as to prestore location information about each reflector array on the server or a separate database and identifying a reflector array installed in a corresponding indoor space through the user terminal so as to determine a location, and thus is configured to accurately determine the user's location even in the indoor spaces comprising a plurality of floors or rooms.

16. An indoor positioning method using reflected light,

**characterized in that** the method is configured to determine a user's location indoors by using an indoor positioning system using the reflected light, which is described in any one of claims 1 to 15 and the method comprises:

an optical signal transmission step of performing a process of transmitting optical signals through an optical signal transmission unit of a user terminal of the indoor positioning system using the reflected light;

an optical signal reception step of performing a process of receiving the optical signals transmitted through the optical signal transmission step and reflected from a reflector array unit of the indoor positioning system through an optical signal transmission unit of the user terminal;

a reflector detection step of performing a process of detecting a reflector array and identifying each reflector through a reflector detection unit of the user terminal on the basis of the optical signals received in the optical signal reception step;

a distance calculation step of performing a process of calculating a distance from the user terminal to each reflector through a distance calculation unit of the user terminal on the basis of identification results of the reflector detection step and the reception information of the optical signals; and

a location determination step of performing a process of determining a location of the user terminal by using a triangulation technique through a location determination unit of the user terminal on the basis of each distance calculated through the distance calculation step and the location information of each reflective surface.

17. The method of claim 16, **characterized in that** the method further comprises:

a database building step of performing a process of building a database related to the user's location and movement for each user by transmitting various data to a server or an external device according to predetermined settings, the various data comprising a location by time, a movement distance, and a movement time of the user, which are obtained through the processing processes and results of the optical signal transmission step, the optical signal reception step, the reflector detection step, the distance calculation step, and the location determination step; and

an information provision step of performing a process of providing corresponding customized information upon a user's request received through the user terminal on the basis of content of the database built through the database building step.

18. A location information service provision system configured to provide location information to a user for both indoors and outdoors depending on the user's locations, **characterized in that** the system comprises:

an outdoor positioning unit configured to perform a process of providing outdoor location information of the user by using a location tracking device comprising a GPS; and
an indoor positioning unit configured to perform a process of providing indoor location information of the user by using an indoor positioning system using reflected light, which is described in any one of claims 1 to 15.

19. A location information service provision method configured to provide location information to a user for both indoors and outdoors depending on the user's locations, **characterized in that** the method comprises:

an outdoor positioning step of performing a process of providing outdoor location information of the user by using a location tracking device comprising a GPS; and
an indoor positioning step of performing a process of providing indoor location information of the user by using an indoor positioning system using reflected light, which is described in any one of claims 1 to 15.

【Figure 1】

<u>10</u>

【Figure 2】

【Figure 3】

【Figure 4】

EP 4 779 348 A1

【Figure 5】

22

【Figure 6】

【Figure 7】

# [Glass bead reflective tape]

# [Prism reflective tape]

【Figure 8】

【Figure 9】

【Figure 10】

【Figure 11】

【Figure 12】

```
                        ( START )
                            │
                            ▼
┌──────────────────────────────────────────────────┐
│   transmitting optical signals through user terminal │
│     and receiving optical signals reflected through  │ ～S10
│       respective reflectors of reflector array       │
└──────────────────────────────────────────────────┘
                            │
                            ▼
┌──────────────────────────────────────────────────┐
│  detecting reflector array and identifying each reflective │ ～S20
│      surface on basis of received optical signals    │
└──────────────────────────────────────────────────┘
                            │
                            ▼
┌──────────────────────────────────────────────────┐
│      calculating distance from user terminal to each │
│  reflective surface on basis of identification results and │ ～S30
│         reception information of optical signals     │
└──────────────────────────────────────────────────┘
                            │
                            ▼
┌──────────────────────────────────────────────────┐
│     determining location of user terminal by using   │
│  triangulation technique on basis of calculated distance │ ～S40
│     and location information of each reflective surface │
└──────────────────────────────────────────────────┘
                            │
                            ▼
                        ( END )
```

【Figure 13】

【Figure 14】

【Figure 15】

## INTERNATIONAL SEARCH REPORT

| International application No. |
|---|
| **PCT/KR2024/004629** |

**A.    CLASSIFICATION OF SUBJECT MATTER**

**G01S 5/16**(2006.01)i; **G01S 17/06**(2006.01)i; **G01S 7/481**(2006.01)i; **G01S 7/4915**(2020.01)i; **G01S 7/4913**(2020.01)i; **G01S 5/00**(2006.01)i; **G02B 5/136**(2006.01)i

According to International Patent Classification (IPC) or to both national classification and IPC

**B.    FIELDS SEARCHED**

Minimum documentation searched (classification system followed by classification symbols)

G01S 5/16(2006.01); A61B 19/00(2006.01); B25J 13/08(2006.01); B25J 5/00(2006.01); G01B 11/00(2006.01); G01S 17/32(2006.01); G01S 7/491(2006.01); G02B 21/14(2006.01); G05D 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재귀반사체(retro-reflector), 위치(position), 배열(array), 실내(indoor), 비행시간 (time of flight)

**C.    DOCUMENTS CONSIDERED TO BE RELEVANT**

| Category* | Citation of document, with indication, where appropriate, of the relevant passages | Relevant to claim No. |
|---|---|---|
| X | JP 2001-075645 A (HITACHI ZOSEN CORP.) 23 March 2001 (2001-03-23)<br>See paragraphs [0004]-[0055] and figures 1, 7 and 9. | 1-4,18-19 |
| Y | | 5-17 |
| DY | KR 10-2180304 B1 (SEOUL NATIONAL UNIVERSITY R&DB FOUNDATION) 18 November 2020 (2020-11-18)<br>See paragraphs [0004] and [0038]-[0114], claims 1-20 and figures 1-4. | 5-17 |
| A | US 2021-0231939 A1 (JENOPTIK OPTICAL SYSTEMS GMBH) 29 July 2021 (2021-07-29)<br>See claim 13. | 1-19 |
| A | KR 10-2011-0124263 A (XYZ INTERACTIVE TECHNOLOGIES INC.) 16 November 2011 (2011-11-16)<br>See paragraph [0101] and figure 3. | 1-19 |

✓ Further documents are listed in the continuation of Box C.     ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 July 2024** | **15 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

### C. DOCUMENTS CONSIDERED TO BE RELEVANT

| Category* | Citation of document, with indication, where appropriate, of the relevant passages | Relevant to claim No. |
|---|---|---|
| A | KR 10-2007-0066192 A (RESEARCH INSTITUTE OF INDUSTRIAL SCIENCE & TECHNOLOGY) 27 June 2007 (2007-06-27) See claim 6. | 1-19 |

Form PCT/ISA/210 (second sheet) (July 2022)

## INTERNATIONAL SEARCH REPORT
### Information on patent family members

International application No.

**PCT/KR2024/004629**

| Patent document cited in search report | | | Publication date (day/month/year) | Patent family member(s) | | | Publication date (day/month/year) |
|---|---|---|---|---|---|---|---|
| JP | 2001-075645 | A | 23 March 2001 | JP | 4172882 | B2 | 29 October 2008 |
| KR | 10-2180304 | B1 | 18 November 2020 | EP | 3974870 | A1 | 30 March 2022 |
| | | | | US | 2022-0228863 | A1 | 21 July 2022 |
| | | | | WO | 2020-256353 | A1 | 24 December 2020 |
| US | 2021-0231939 | A1 | 29 July 2021 | CN | 112424668 | A | 26 February 2021 |
| | | | | DE | 102018113182 | A1 | 05 December 2019 |
| | | | | EP | 3803494 | A1 | 14 April 2021 |
| | | | | JP | 2021-527842 | A | 14 October 2021 |
| | | | | WO | 2019-233935 | A1 | 12 December 2019 |
| KR | 10-2011-0124263 | A | 16 November 2011 | CA | 2764120 | A1 | 05 August 2010 |
| | | | | CA | 2764120 | C | 08 January 2019 |
| | | | | CA | 2963578 | A1 | 14 April 2016 |
| | | | | CN | 102365560 | A | 29 February 2012 |
| | | | | CN | 102365560 | B | 18 June 2014 |
| | | | | CN | 104111446 | A | 22 October 2014 |
| | | | | CN | 106717124 | A | 24 May 2017 |
| | | | | CN | 106717124 | B | 18 September 2020 |
| | | | | CN | 107003381 | A | 01 August 2017 |
| | | | | CN | 112040589 | A | 04 December 2020 |
| | | | | EP | 2391905 | A1 | 07 December 2011 |
| | | | | EP | 2391905 | B1 | 20 November 2019 |
| | | | | EP | 3204787 | A1 | 16 August 2017 |
| | | | | JP | 2012-515899 | A | 12 July 2012 |
| | | | | JP | 2016-027339 | A | 18 February 2016 |
| | | | | JP | 2017-537309 | A | 14 December 2017 |
| | | | | JP | 6218785 | B2 | 25 October 2017 |
| | | | | KR | 10-2017-0097607 | A | 28 August 2017 |
| | | | | US | 10320384 | B2 | 11 June 2019 |
| | | | | US | 10452157 | B2 | 22 October 2019 |
| | | | | US | 10749525 | B2 | 18 August 2020 |
| | | | | US | 10996768 | B2 | 04 May 2021 |
| | | | | US | 11362657 | B2 | 14 June 2022 |
| | | | | US | 2011-0279366 | A1 | 17 November 2011 |
| | | | | US | 2015-0309154 | A1 | 29 October 2015 |
| | | | | US | 2016-0223636 | A1 | 04 August 2016 |
| | | | | US | 2017-0117891 | A1 | 27 April 2017 |
| | | | | US | 2018-0107288 | A1 | 19 April 2018 |
| | | | | US | 2019-0044510 | A1 | 07 February 2019 |
| | | | | US | 2019-0101614 | A1 | 04 April 2019 |
| | | | | US | 2019-0120925 | A1 | 25 April 2019 |
| | | | | US | 2020-0050287 | A1 | 13 February 2020 |
| | | | | US | 2020-0059230 | A1 | 20 February 2020 |
| | | | | US | 2020-0350911 | A1 | 05 November 2020 |
| | | | | US | 2021-0043398 | A1 | 11 February 2021 |
| | | | | US | 2021-0255714 | A1 | 19 August 2021 |
| | | | | US | 2023-0208420 | A1 | 29 June 2023 |
| | | | | US | 9024810 | B2 | 05 May 2015 |
| | | | | WO | 2010-085877 | A1 | 05 August 2010 |
| | | | | WO | 2015-184530 | A1 | 10 December 2015 |
| | | | | WO | 2016-054736 | A1 | 14 April 2016 |

Form PCT/ISA/210 (patent family annex) (July 2022)

**INTERNATIONAL SEARCH REPORT**
Information on patent family members

| | International application No. |
| --- | --- |
| | **PCT/KR2024/004629** |

| Patent document cited in search report | Publication date (day/month/year) | Patent family member(s) | Publication date (day/month/year) |
| --- | --- | --- | --- |
| KR 10-2007-0066192 A | 27 June 2007 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102180304